Europäisches Patentamt

European Patent Office

Office européen des brevets

(19)

(11) Numéro de publication: **0 084 488**
**B1**

(12) **FASCICULE DE BREVET EUROPEEN**

(45) Date de publication du fascicule du brevet: **16.03.88**

(21) Numéro de dépôt: **83400071.3**

(22) Date de dépôt: **12.01.83**

(51) Int. Cl.⁴: **B 60 B 37/10**

(54) Axe de roue et embout pour sa réalisation.

(30) Priorité: **12.01.82 FR 8200366**

(43) Date de publication de la demande:
**27.07.83 Bulletin 83/30**

(45) Mention de la délivrance du brevet:
**16.03.88 Bulletin 88/11**

(84) Etats contractants désignés:
**AT BE CH DE GB IT LI LU NL SE**

(56) Documents cités:
**DE-A-1 505 849**
**DE-A-2 018 824**
**DE-A-3 034 457**
**DE-B-1 120 284**
**GB-A- 24 747**
**GB-A- 239 731**

(73) Titulaire: **COMPAGNIE PLASTIC OMNIUM
Société Anonyme dite:
58 avenue Leclerc
F-69342 Lyon (FR)**

(72) Inventeur: **Michelutti, Patrice
453, Cité Vauban
F-52200 Langres (FR)**
Inventeur: **Humbert, Pierre
Casa 269, Tancat de l'Alter
Picasent (Valencia) (ES)**

(74) Mandataire: **Nony, Michel et al
Cabinet Nony 29, rue Cambacérès
F-75008 Paris (FR)**

Courier Press, Leamington Spa, England.

# Description

La présente invention est relative à un axe de roue, notamment de roue de bac roulant de manutention ou de collecte de déchets industriels ou ménagers.

Les axes actuels sont généralement constitués en acier plein et sont usinés au voisinage de chacune de leurs extrémités pour permettre le montage et l'immobilisation axiale de la roue. Ainsi par exemple pour une roue à nez on réalise un chanfrein d'extrémité, et le cas échéant, une gorge annulaire pour la réception d'un bonhomme à ressort monté sur le moyeu de la roue, qui s'engage alors dans la gorge correspondante par encliquetage pour assurer l'immobilisation axiale de la roue sur son axe. D'autres moyens d'immobilisation existent en fonction du type de la roue.

De tels axes en acier plein usinés présentent l'inconvénient de réaliser une structure relativement lourde et chère et, de plus, n'assurent que des caractéristiques de frottement relativement faibles entre le moyeu et/ou l'extrémité du bonhomme à ressort et l'axe ou respectivement le fond de la gorge en métal dans lequel s'engage le bonhomme à ressort.

On connaît également par GB—A—239731, GB—A—24747 et DE—A—2018824 des axes de roues présentant un corps d'axe, au moins un embout, sensiblement cylindrique monté à au moins une extrémité dudit corps d'axe, des moyens de verrouillage coopérant sur l'embout et le corps d'axe pour immobiliser axialement l'embout par rapport audit corps d'axe et des moyens coopérant sur l'embout et la roue pour immobiliser axialement la roue sur le corps d'axe.

Ces axes de roues sont en acier plein usinés et les embouts sont engagés sur lesdits axes, des moyens supplémentaires difficiles à mettre en oeuvre devant être prévus pour immobiliser les embouts sur les corps d'axes.

La présente invention se propose de réaliser un axe de roue qui, tout en permettant un montage facile des roues correspondantes, soit d'une conception particulièrement simple et économique et permette une excellente immobilisation des roues. Ce but est atteint dans un axe de roue tel que défini dans la revendication 1.

De préférence l'embout comporte au moins une saillie au voisinage de son extrémité s'engageant dans ou sur le corps d'axe, celui-ci comprenant dans sa paroi au moins un orifice adapté à recevoir ladite saillie. De préférence également l'élasticité radiale de l'extrémité de l'embout portant la ou lesdites saillies est assurée par des gorges longitudinales.

De façon avantageuse l'embout comporte une collerette destinée à venir buter contre l'extrémité du corps d'axe une fois l'embout engagé dans celui-ci. Dans les modes de réalisation comportant au moins une saillie de verrouillage la distance sur l'embout entre la collerette et la ou les saillies correspond à la distance sur le corps d'axe entre l'extrémité de celui-ci et le ou les orifices ménagés pour recevoir la ou les saillies, de telle sorte que, lorsque la ou les saillies s'engagent dans le ou les orifices correspondants, la collerette de l'embout vient en butée contre l'extrémité du corps d'axe.

Dans une forme préférée de mise en oeuvre de l'invention le corps d'axe est tubulaire sur toute sa longueur et comporte à chacune de ses extrémités un embout tel que décrit ce-dessus, engagé par encliquetage.

Chacun des embouts est de préférence réalisé en matière plastique moulable par injection et ayant un bon effet ressort telle que par exemple un polyoxyméthylène (POM), chaque embout étant réalisable ainsi d'un seul tenant.

Selon une caractéristique avantageuse de l'invention, l'embout présente au voisinage de son extrémité opposée à celle s'engageant dans le tronçon tubulaire du corps d'axe une gorge périphérique. Cette gorge périphérique est dimensionnée pour recevoir par encliquetage, le bonhomme à ressort d'une roue.

Les seules opérations d'usinage nécessaires selon l'invention sur le corps d'axe, partiellement ou totalement tubulaire, sont donc le cas échéant pour les embouts encliquetés le perçage d'orifices de retenue d'embouts. On évite ainsi les opérations d'usinage relativement complexes et coûteuses des gorges prévues antérieurement dans les axes pour la réception des moyeux ou des bonhommes à ressort. Ces gorges sont, dans les modes de réalisation où elles sont prévues, réalisées selon l'invention, dans les embouts eux-mêmes au cours de l'opération de moulage de ceux-ci.

Pour favoriser l'introduction de l'embout dans ou sur le corps d'axe l'extrémité correspondante de l'embout comporte avantageusement un chanfrein tronconique. Un chanfrein tronconique peut être également réalisé à l'extrémité opposée de l'embout, conférant alors à l'extrémité de l'axe selon l'invention la forme traditionnelle des extrémités d'axes métalliques pleins usinés de roues à nez.

La gorge sur l'embout est avantageusement délimitée entre deux collerettes l'une constituant le prolongement de la partie extérieure chanfreinée de l'embout et l'autre la collerette de positionnement sur l'extrémité du corps d'axe.

On comprend que lorsque le fond de la gorge est en matière plastique, notamment en POM, on assure un meilleur coefficient de frottement du bonhomme à ressort ou du moyeu de la roue sur l'axe que cela n'était pas le cas avec des axes traditionnels à gorges usinées dans le métal.

La présente invention a également pour objet un embout tel que défini ci-dessus, réalisé de préférence d'un seul tenant par moulage par injection et comportant une pièce cylindrique munie de moyens de verrouillage pour l'immobilisation axiale de l'embout sur le corps d'axe et de moyens participant à l'immobilisation axiale de la roue sur le corps d'axe, caractérisé par le fait qu'il est constitué d'une pièce cylindrique, au moins en partie creuse, à élasticité radiale comportant des moyens d'immobilisation axiale par encliquetage dans le corps d'axe réalisés sur la surface externe de ladite pièce cylindrique.

La conception d'axe selon l'invention n'entraîne naturellement aucune modification des roues, l'axe selon l'invention permettant le montage des mêmes roues que les axes traditionnels de même diamètre.

Dans le but de mieux faire comprendre l'invention on va maintenant en décrire à titre d'exemple nullement limitatif plusieurs modes de réalisation en se référant au dessin annexé dans lequel:

— la figure 1 est une vue en élévation et demi-coupe de l'extrémité d'un axe selon l'invention avec une roue montée,

— la figure 2 est une vue en coupe d'un embout selon l'invention,

— la figure 3 est une vue d'extrémité de l'embout,

— la figure 4 est une vue de dessus de l'embout,

— la figure 5 est une vue en élevation, partiellement en coupe, d'un corps tubulaire d'axe selon l'invention,

— la figure 6 est une vue en coupe selon VI—VI de la figure 5,

— la figure 7 est une vue similaire à celle de la figure 1 d'un second mode de réalisation, On se réfère tout d'abord aux figures 1 à 6.

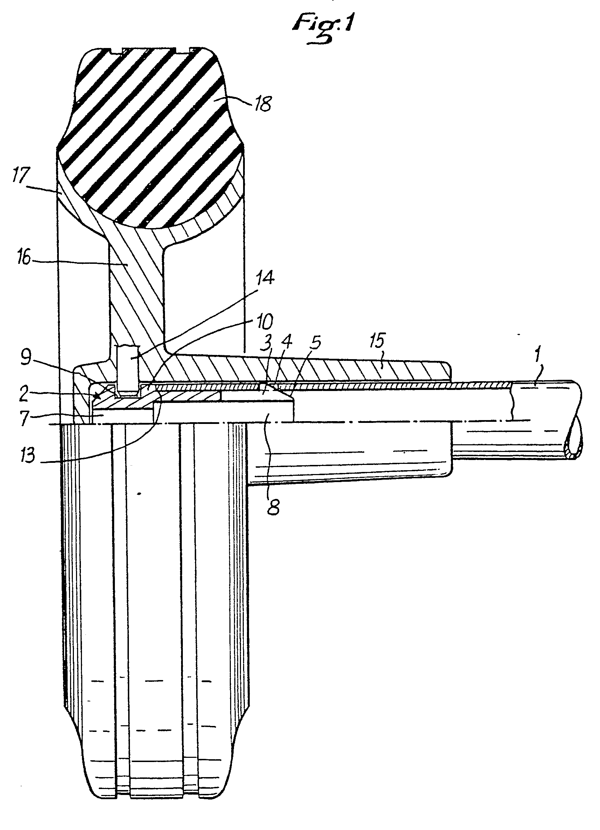

On voit sur la figure 1 une extrémité d'axe selon l'invention sur laquelle est montée une roue à nez du type à bonhomme à ressort.

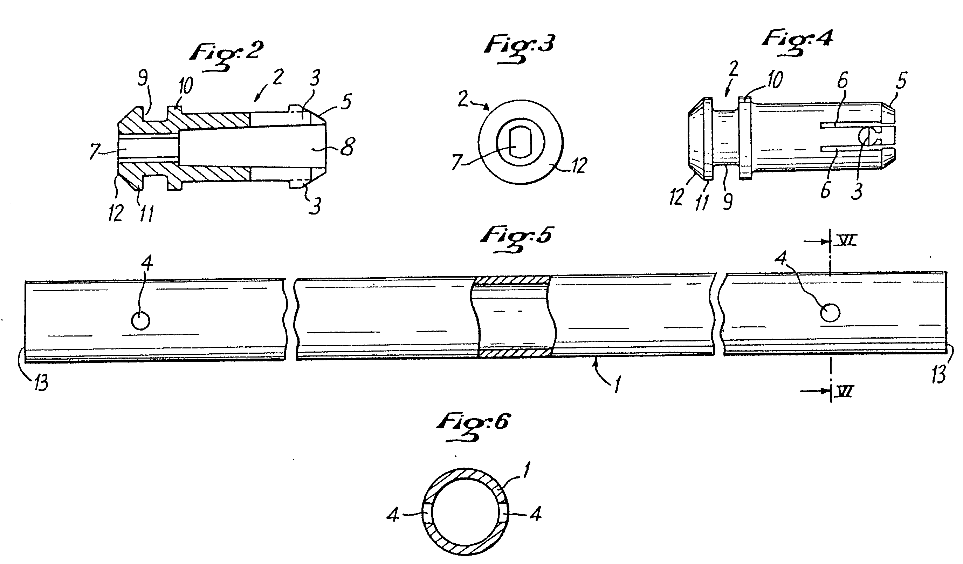

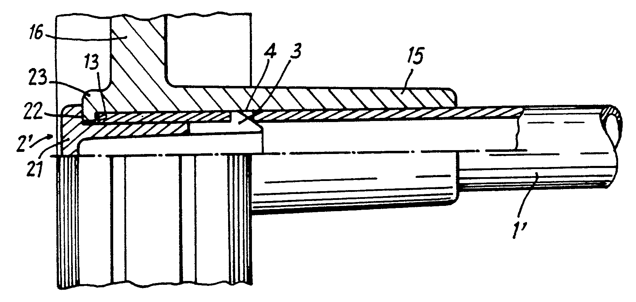

Sur l'extrémité d'un corps d'axe tubulaire 1 que l'on voit le mieux sur la figure 5 est engagé un embout en matière plastique désigné globalement par 2 et que l'on voit le mieux en référence aux figures 2 à 4.

Pour son immobilisation dans le corps d'axe 1 l'embout présente au voisinage de son extrémité par laquelle il s'engage dans le corps d'axe au moins une, et comme illustré sur le dessin, deux saillies 3 susceptibles de s'engager par encliquetage dans des orifices correspondants 4 percés dans le corps d'axe, comme on le voit le mieux aux figures 5 et 6.

L'extrémité de l'embout comportant les saillies 3 présente un chanfrein d'extrémité 5 favorisant son introduction dans le corps d'axe.

Pour permettre un engagement par encliquetage des saillies 3 dans les orifices correspondants 4 du corps d'axe on a réalisé sur l'embout de part et d'autre de chaque saillie 3 des gorges longitudinales 6 conférant une élasticité radiale.

L'embout 2, comme on le voit le mieux sur la figure 2 présente une forme sensiblement cylindrique avec un évidement interne de section méplate 7 au voisinage d'une extrémité, prolongé par un évidement interne de plus grand diamètre 8 à la suite et jusqu'à l'extrémité chanfreinée 5. Le méplat permet d'assurer un positionnement angulaire de l'embout lors de sa mise en place dans le corps d'axe. L'embout comporte en outre une gorge 9 délimitée par une collerette 10, qui, comme on le voit sur la figure 1, est destinée à venir en butée contre l'extrémité du corps d'axe 1, et par une collerette 11 prolongée par un chanfrein d'extrémité 12.

La distance entre la collerette 10 et les saillies 3 correspond naturellement à la distance entre l'extrémité 13 du corps d'axe tubulaire 1 et les orifices 4 percés dans celui-ci afin que lorsque les saillies 3 s'engagent dans les orifices 4 la collerette 10 vient s'appliquer contre l'extrémité correspondante 13.

Dans cette position, que l'on voit sur la figure 1, on peut engager, de la même manière que sur un axe traditionnel, une roue comportant un bonhomme à ressort 14 conventionnel, représenté seulement très schématiquement sur le dessin, un moyeu 15 se prolongeant par un voile 16 et une jante 17 portant une bande de roulement 18.

La roue est engagée sur l'extrémité de l'axe constitué du corps d'axe 1 et de l'embout 2 engagé dans celui-ci depuis la gauche de la figure 1, le bonhomme à ressort 14 s'escamotant contre le chanfrein d'extrémité 12 puis s'engageant sous l'action de son ressort (non représenté) dans la gorge 9 de l'embout.

Naturellement une autre roue est montée de la même manière sur l'autre extrémité (non représentée) de l'axe.

Dans le mode de réalisation de la figure 7 l'embout 2' comporte un flasque ou collerette d'extrémité 21, et présente à son extrémité opposée au moins une saillie 3 susceptible de s'engager dans un orifice correspondant 4 de la paroi du corps d'axe tubulaire 1'comme dans le mode de réalisation de la figure 1. Dans ce mode de réalisation le moyeu 15 présente une bride d'extrémité 23 dont la face externe vient en appui contre la face en regard 22 du flasque d'extrémité 21 de l'embout.

Pour réaliser le montage de ce mode de réalisation on monte la roue sur le corps d'axe puis on met en place dans le corps d'axe tubulaire l'embout 2' jusqu'à immobilisation par engagement à encliquetage de la ou des saillies 3 dans le ou les orifices correspondants 4.

**Revendications**

1. Axe de roue, présentant un corps d'axe (1, 1'), au moins un embout (2, 2'), sensiblement cylindrique monté à au moins une extrémité dudit corps d'axe, des moyens de verrouillage (3, 4) coopérant sur l'embout et le corps d'axe pour immobiliser axialement l'embout par rapport audit corps d'axe et des moyens coopérant sur l'embout et la roue pour immobiliser axialement la roue sur le corps d'axe, caractérisé par le fait que le corps d'axe (1, 1') comporte à au moins l'une de ses extrémités un tronçon tubulaire, que l'embout (2, 2') présente une élasticité radiale et s'engage partiellement par une extrémité dans ledit tronçon tubulaire et que lesdits moyens de verrouillage (3, 4) sont agencés pour immobiliser axialement l'embout dans le corps d'axe par encliquetage lors de l'enfoncement de l'embout dans le corps d'axe.

2. Axe selon la revendication 1, caractérisé par le fait que le corps d'axe (1, 1') est métallique.

3. Axe selon l'une quelconque des revendications 1 et 2, caractérisé par le fait que le corps d'axe (1, 1') est tubulaire sur toute sa longueur.

4. Axe selon l'une quelconque des revendications précédentes, caractérisé par le fait que les moyens de verrouillage comprennent au moins une saillie (3) sur l'embout, au voisinage de son extrémité s'engageant dans le corps d'axe, celui-ci comportant dans sa paroi au moins un orifice (4) adapté à recevoir ladite saillie.

5. Axe selon l'une quelconque des revendications précédentes, caractérisé par le fait que l'élasticité radiale est assurée par des gorges longitudinales (6) de l'embout.

6. Axe selon l'une quelconque des revendications précédentes, caractérisé par le fait que l'embout comporte une collerette (10) destinée à venir en butée contre l'extrémité (13) du corps d'axe une fois l'embout engagé dans celui-ci, la distance sur l'embout entre la collerette et les moyens de verrouillage correspondant à la distance sur le corps d'axe entre l'extrémité de celui-ci et les moyens de verrouillage coopérants prévus sur celui-ci.

7. Axe selon l'une quelconque des revendications précédentes, caractérisé par le fait que l'embout présente un chanfrein tronconique (5) à son extrémité s'engageant dans ledit corps d'axe.

8. Axe selon l'une quelconque des revendications précédentes, caractérisé par le fait que l'embout présente un chanfrein tronconique (5, 12) à chacune de ses extrémités.

9. Axe selon l'une quelconque des revendications précédente, caractérisé par le fait que l'embout comporte une gorge périphérique (9) au voisinage de son extrémité opposée à celle s'engageant dans le tronçon tubulaire du corps d'axe.

10. Axe selon la revendication 9, de roue comportant un bonhomme à ressort, caractérisé par le fait que ladite gorge est dimensionnée pour recevoir par encliquetage un bonhomme à ressort (14) prévu sur la roue.

11. Axe selon l'une quelconque des revendications 9 et 10, caractérisé par le fait que ladite gorge (9) est réalisée entre deux collerettes (10, 11) de l'embout.

12. Embout pour la réalisation d'un axe de roue selon l'une quelconque des revendications précédentes, comportant une pièce cylindrique munie de moyens de verrouillage pour l'immobilisation axiale de l'embout sur le corps d'axe et de moyens participant à immobilisation axiale de la roue sur le corps d'axe, caractérisé par le fait qu'il est constitué d'une pièce cylindrique (2, 2') au moins en partie creuse à élasticité radiale, comportant des moyens d'immobilisation axiale (3) par encliquetage dans le corps d'axe réalisés sur la surface externe de ladite pièce cylindrique.

13. Embout selon la revendication 12, caractérisé par le fait qu'il est réalisé d'un seul tenant par moulage par injection.

**Patentansprüche**

1. Radachse mit einem Achskörper (1, 1'), mit mindestens einem im wesentlichen zylindrischen Ansatzstück (2, 2'), das an mindestens einem Endbereich des genannten Achskörpers montiert ist, mit auf dem Ansatzstück und am Achskörper kooperierenden Verriegelungsmitteln (3, 4) für die axiale Fixierung des Ansatzstücks gegenüber dem Achskörper und mit auf dem Ansatzstück und am Rad kooperierenden Mitteln für den axialen Halt des Rades am Achskörper, dadurch gekennzeichnet, daß der Achskörper (1, 1') an mindestens einem seiner Endbereiche ein rohrförmiges Endstück aufweist, daß das Ansatzstück (2, 2') eine radiale Elastizität aufweist und partiell in einen Endbereich des genannten rohrförmigen Endstücks eingreift, und daß die genannten Verriegelungsmittel (3, 4) eingerichtet sind, axial das Ansatzstück im Achskörper durch Einrasten während des Eindrückens des Ansatzstückes in den Achskörper festzulegen.

2. Achse nach Anspruch 1, dadurch gekennzeichnet, daß der Achskörper (1, 1') metallisch ist.

3. Achse nach Anspruch 1 oder 2, dadurch gekennzeichnet, daß der Achskörper (1, 1') über seine gesamte Länge rohrförmig ist.

4. Achse nach einem der vorangehenden Ansprüche, dadurch gekennzeichnet, daß die Verriegelungsmittel zumindest einen Vorsprung (3) auf dem Ansatzstück und in Nähe seines Endbereichs aufweisen, der in den Achskörper eingreift, welcher in seiner Wandung mindestens eine Öffnung (4) hat, die für die Aufnahme dieses Vorsprungs ausgebildet ist.

5. Achse nach einem der vorangehenden Ansprüche, dadurch gekennzeichnet, daß die radiale Elastizität durch Längskehlen (6) des Ansatzstücks gewährleistet ist.

6. Achse nach einem der vorangehenden Ansprüche, dadurch gekennzeichnet, daß das Ansatzstück einen Kragen (10) aufweist, der dazu bestimmt ist, gegen den Endbereich (13) des Achskörpers in Anschlag zu kommen, wenn das Ansatzstück in diesen eingesetzt ist, der Abstand auf dem Ansatzstück zwischen dem Kragen und den Verriegelungsmitteln entspricht dem Abstand auf den Achskörper zwischen dessen Endbereich und den zusammenwirkenden Verriegelungsmitteln, die auf diesem vorgesehen sind.

7. Achse nach einem der vorangehenden Ansprüche, dadurch gekennzeichnet, daß das Ansatzstück eine kegelstumpfförmige Fase (5) an seinem in den genannten Achskörper eingreifenden Endbereich aufweist.

8. Achse nach einem der vorangehenden Ansprüche, dadurch gekennzeichnet, daß das Ansatzstück eine kegelstumpfförmige Fase (5, 12) an jedem seiner Endbereich aufweist.

9. Achse nach einem der vorangehenden Ansprüche, dadurch gekennzeichnet, daß das Ansatzstück eine periphäre Einkehlung (9) in Nähe seines Endbereichs aufweist, der entgegengesetzt demjenigen ist, welcher in das rohrförmige Endstück des Achskörpers eingreift.

10. Achse nach Anspruch 9, dessen Rad ein Federrastteil aufweist, dadurch gekennzeichnet, daß die genannte Einkehlung so bemessen ist, daß sie nach Einrasten das am Rad vorgesehene Federrastteil (14) aufnimmt.

11. Achse nach Anspruch 9 oder 10, dadurch gekennzeichnet, daß die Einkehlung (9) zwischen zwei Kragen (10, 11) des Ansatzstücks ausgeführt ist.

12. Ansatzstück für die Herstellung einer Radachse nach einem der vorangegangenen Patentansprüche mit einem zylindrischen Teil, das mit Verriegelungsmitteln für die axiale Fixierung des Ansatzstücks auf dem Achskörper und Mitteln für die axiale Fixierung des Rades auf dem Achskörper ausgerüstet ist, dadurch gekennzeichnet, daß es durch ein zylindrisches Teil (2, 2') gebildet ist, das mindestens teilweise hohl ist bei radialer Elastizität und Mittel für die axiale Fixierung (3) durch Einrasten in den Achskörper aufweist, die auf der Außenfläche des genannten zylindrischen Teils ausgebildet sind.

13. Ansatzstück nach Anspruch 12, dadurch gekennzeichnet, daß es einstückig im Spritzgußverfahren gefertigt ist.

**Claims**

1. A wheel axle which exhibits an axle body (1, 1‚), at least one substantially cylindrical ferrule (2, 2') mounted at at least one end of the said axle body, locking means (3, 4) which cooperate on the ferrule and the axle body for fixing the ferrule axially with respect to the said axle body and means which cooperate on the ferrule and the wheel for fixing the wheel axially on the axle body, characterized by the fact that the axle body (1, 1') includes at at least one end of it a tubular portion, that the ferrule (2, 2') exhibits a radial elasticity and is engaged partially by one end in the said tubular portion and that the said locking means (3, 4) are designed for fixing the ferrule axially in the axle body by snapping in upon forcing the ferrule into the axle body.

2. An axle as in Claim 1, characterized by the fact that the body (1, 1') is metallic.

3. An axle as in either of the Claims 1 and 2, characterized by the fact that the axle body (1, 1') is tubular along its whole length.

4. An axle as in any one of the preceding Claims, characterized by the fact that the locking means comprise at least one projection (3) from the ferrule in the vicinity of the end of it to engage in the axle body which includes in the wall of it at least one aperture (4) suitable for receiving the said projection.

5. An axle as in any one of the preceding Claims, characterized by the fact that the radial elasticity is ensured by longitudinal recesses (6) in the ferrule.

6. An axle as in any one of the preceding Claims, characterized by the fact that the ferrule includes a small collar (10) intended for coming to a stop against the end (13) of the axle body once the ferrule has been engaged in the latter, the distance along the ferrule between the small collar and the locking means corresponding with the distance along the axle body between the end of it and the cooperating locking means provided on it.

7. An axle as in any one of the preceding Claims, characterized by the fact that the ferrule exhibits a frustoconical chamfer (5) at the end of it which engages in the said axle body.

8. An axle as in any one of the preceding Claims, characterized by the fact that the ferrule exhibits a frustoconical chamfer (5, 12) at each end of it.

9. An axle as in any one of the preceding Claims, characterized by the fact that the ferrule includes a peripheral groove (9) in the vicinity of the end of it remote from that which engages in the tubular portion of the axle body.

10. An axle as in Claim 9 for a wheel which includes a spring catch, characterized by the fact that the said groove is dimensioned for receiving by snapping in, a spring catch (14) provided on the wheel.

11. An axle as in either of the Claims 9 and 10, characterized by the fact that the said groove (9) is produced between two small collars (10, 11) on the ferrule.

12. A ferrule for the realization of a wheel axle as in any one of the preceding Claims, and including a cylindrical piece equipped with locking means for the axial fixing of the ferrule onto the axle body and means which participate in the axial fixing of the wheel onto the axle body, characterized by the fact that it consists of an at least partially hollow cylindrical piece (2, 2') having radial elasticity and including means realized on the outer surface of the said cylindrical piece for axial fixing (3) by snapping into the axle body.

13. A ferrule as in Claim 12, characterized by the fact that it is produced in one piece by injection moulding.

## Fig.1

Fig.2

Fig.3

Fig.4

Fig.5

Fig.6

## Fig. 7